# EUROPEAN PATENT SPECIFICATION

(11) **EP 0 940 590 B1**
(45) Date of publication and mention of the grant of the patent: **08.01.2003**
(21) Application number: 99301610.4
(22) Date of filing: 03.03.1999
(51) Int. Cl.: F16B 31/04

(54) **Connecting means**
Verbindungsvorrichtung
Moyens de connexion

(30) Priority: 03.03.1998 US 33790
(43) Date of publication of application: 08.09.1999
(73) Proprietor: Junkers, John K., Saddle River, New Jersey 07458 (US)
(72) Inventor: Junkers, John K., Saddle River, New Jersey 07458 (US)
(74) Representative: Newby, Martin John

(56) References cited:
- DE-U- 29 809 229
- US-A- 5 318 397
- US-A- 5 622 465

## Description

This invention relates generally to connecting means for connecting two parts together.

Screw-threaded connectors for connecting together two parts are known in the art. Some known screw-threaded connectors are formed as screw-threaded bolts with or without a head, and with or without a nut. One such known screw-threaded connector is disclosed, for example, in US-A-5,318,397. However this known screw-threaded connector can be further improved.

Accordingly, it is an aim of present invention to provide an improved connecting means.

In keeping with the aim and with others which will become apparent hereinafter, there is provided a connecting means as claimed in the ensuing claim 1.

A connecting means in accordance with the present invention has a simple construction and can be elongated and relaxed as required.

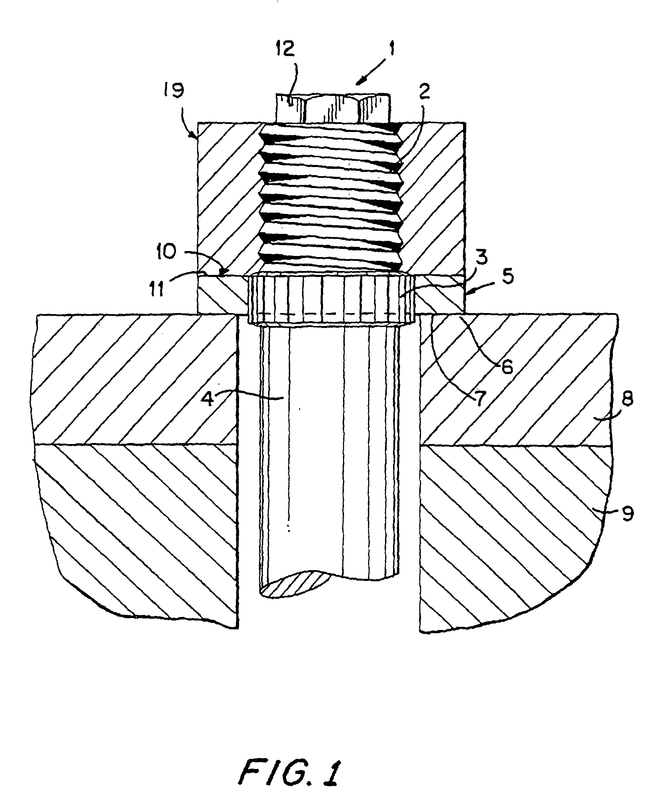

An embodiment of the invention will now be described, by way of example only, with particular reference to the accompanying drawing the sole figure of which is a sectional view of a connecting means according to the invention for connecting two parts together.

A connecting means in accordance with present invention comprises a bolt member, generally designated by the reference numeral 1, having a longitudinal axis. The bolt member 1 includes a screw-threaded portion 2 located substantially at one of its ends and a portion 3 of non-circular section, e.g. having a polygonal circumference, which is axially spaced from, or adjacent to, the screw-threaded bolt portion 2. The bolt member 1 also has a shaft portion 4 which may be provided, at the end of the bolt member remote from the portion 2, with a head (not shown). The non-circular circumference of the portion 3 can be provided by a plurality of splines which extend in the axial direction of the bolt member and are spaced from one another in a peripheral direction of the bolt member 1.

The connecting means as shown connects two parts 8 and 9 together and further comprises a friction washer 5 having a first axial end face 6 which abuts against a surface area 7 of the part 8. The fiction washer 5 is non-rotatably connected to the non-circular circumference of the bolt portion 3 but is movable axially relative thereto. In particular, the friction washer 5 conveniently has an inner surface with a shape corresponding to the shape of the outer surface of the bolt portion 3. In the embodiment shown, the inner surface of the friction washer 5 is provided with a plurality of splines which correspond to, and interengage with, the splines of the bolt portion 3 thereby allowing the bolt member 1 to be displaced in an axial direction relative to the friction washer 5.

The connecting means further comprises a sleeve 19 having an axial end face 10 which abuts against a second axial end face 11 of the friction washer 5 opposite to the end face 6. The sleeve 19 is screw-threadedly connected to the screw thread of the screw-threaded portion 2 of the bolt member 1. In particular, the sleeve 19 has an inner screw thread which corresponds to, and engages with, the outer screw thread of the threaded portion 2.

The connecting means in accordance with the present invention operates in the following manner:

When a given turning force is applied in one turning direction to the bolt member 1 and a given turning force is applied in an opposite turning direction to the sleeve 19, only the sleeve 19 turns while the bolt member is elongated or relaxed. The reason for this is that on the one hand the bolt member 1 is not able to turn since it is non-rotatably fixed, via the non-circular circumference portion 3, to the friction washer 5, and on the other hand, the bolt member 1 is not able to move axially since its outer screw thread engages with the inner screw thread of the sleeve 19. Only elongation or relaxation of the bolt member 1 is performed.

It will be understood that each of the elements described above, or two or more together, may also find a useful application in other types of constructions differing from the types described above.

While the invention has been illustrated and described as embodied in a connecting means, it is not intended to be limited to the details shown, since various modifications and structural changes may be made without departing from the scope of the claimed invention.

## Claims

1. A connecting means for connecting two parts (8, 9) with one another, comprising a bolt member (1) having an axis, a threaded portion (2) having a screw thread, and another portion (3) having a non-circular, e.g. polygonal, circumference; a friction member (5) connected to said non-circular circumference of said other portion (3) and having a first surface area (6) for abutment against a surface area (7) of one of the parts (8) to be connected, and an opposite second surface area (11); and a sleeve (19) connectable to the said screw thread of the bolt member (1) and having a third surface area (10) abutting against said second surface area (11) of said friction member (5) so that when a given force is applied in one direction to said bolt member (1) and a given force is applied in an opposite direction to said sleeve (19), only said sleeve (19) turns while said bolt member (1) is elongated or relaxed.

2. A bolt according to claim 1, wherein said threaded portion (2) and said other portion (3) of said bolt member are axially spaced from, or axially adjacent, one another.

3. A bolt according to claim 1 or 2, wherein said sleeve (19) has a screw thread engaging with the screw thread of said threaded portion (2).

4. A bolt according to claim 3, wherein said screw thread of said sleeve (19) is an inner screw thread and said screw thread of said threaded portion (2) is an outer screw thread engaging with said inner screw thread.

5. A bolt according to any one of the preceding claims, further comprising connecting means for connecting said friction washer (5) with said non-circular circumference of said another portion (3) of the bolt member (1) and including interengaging splines provided on the friction washer (5) and on the non-circular circumference of said another portion (3).

6. A bolt according to claim 5, wherein said splines comprise inwardly extending splines provided on said friction washer and, interengaging therewith, outwardly extending splines provided on said non-circular circumference of said another portion of the bolt member (1).

## Patentansprüche

1. Verbindungsmittel zur Verbindung von zwei Teilen (8, 9) miteinander, mit Folgendem: einem Bolzenglied (1), das eine Achse, einen Gewindeteil (2) mit einem Schraubgewinde und einen anderen Teil (3) mit einem nichtkreisförmigen, zum Beispiel polygonalen, Umfang aufweist; einem mit dem nichtkreisförmigen Umfang des anderen Teils (3) verbundenen Reibungsglied (5), das eine erste Oberfläche (6) zur Anlage an eine Oberfläche (7) eines der zu verbindenden Teile (8) und eine gegenüberliegende zweite Oberfläche (11) aufweist; und einer mit dem Schraubgewinde des Bolzenglieds (1) verbindbaren Hülse (19), die eine an die zweite Oberfläche (11) des Reibungsglieds (5) anliegende dritte Oberfläche (10) aufweist, so dass bei Anlegen einer gegebenen Kraft an das Bolzenglied (1) in einer Richtung und einer gegebenen Kraft an die Hülse in einer entgegengesetzten Richtung sich nur die Hülse (19) dreht, während das Bolzenglied (1) gedehnt oder entspannt wird.

2. Bolzen nach Anspruch 1, bei dem der Gewindeteil (2) und der andere Teil (3) des Bolzenglieds axial voneinander beabstandet sind oder axial nebeneinander liegen.

3. Bolzen nach Anspruch 1 oder 2, bei dem die Hülse (19) ein mit dem Schraubgewinde des Gewindeteils (2) in Eingriff stehendes Schraubgewinde aufweist.

4. Bolzen nach Anspruch 3, bei dem das Schraubgewinde der Hülse (19) ein Innengewinde und das Schraubgewinde des Gewindeteils (2) ein mit dem Innengewinde in Eingriff stehendes Außengewinde ist.

5. Bolzen nach einem der vorhergehenden Ansprüche, der weiterhin ein Verbindungsmittel zur Verbindung der Reibscheibe (5) mit dem nichtkreisförmigen Umfang des anderen Teils (3) des Bolzenglieds (1) umfasst, das ineinandergreifende Keilverzahnungen enthält, die an der Reibscheibe (5) und an dem nichtkreisförmigen Umfang des anderen Teils (3) vorgesehen sind.

6. Bolzen nach Anspruch 5, bei dem die Keilverzahnungen sich nach innen erstreckende Keilverzahnungen, die an der Reibscheibe vorgesehen sind, und damit in Eingriff stehende, sich nach außen erstreckende Keilverzahnungen, die am nichtkreisförmigen Umfang des anderen Teils des Bolzenglieds (1) vorgesehen sind, umfassen.

## Revendications

1. Moyen de connexion pour connecter deux parties (8, 9) l'une avec l'autre, comprenant un élément de vis (1) ayant un axe, une partie filetée (2) ayant un filetage, et une autre partie (3) ayant une circonférence non circulaire, par exemple polygonale ; un élément de friction (5) connecté à ladite circonférence non circulaire de ladite autre partie (3) et ayant une première zone de surface (6) pour l'aboutement contre une zone de surface (7) de l'une des parties (8) à connecter et une deuxième zone de surface (11) ; et un manchon (19) pouvant être connecté audit filetage de l'élément de vis (1) et ayant une troisième zone de surface (10) en aboutement contre ladite deuxième zone de surface (11) dudit élément de friction (5) de façon à ce que quand une force donnée est appliquée dans une direction audit élément de vis (1) et qu'une force donnée est appliquée dans une direction opposée audit manchon (19), seul ledit manchon (19) tourne tandis que ledit élément de vis (1) est allongé ou détendu.

2. Vis selon la revendication 1, dans laquelle ladite partie filetée (2) et ladite autre partie (3) dudit élément de vis sont espacées dans le sens axial, ou adjacentes dans le sens axial, l'une par rapport à l'autre.

3. Vis selon la revendication 1 ou 2, dans laquelle ledit manchon (19) a un filetage s'engageant avec le filetage de ladite partie filetée (2).

4. Vis selon la revendication 3, dans laquelle ledit filetage dudit manchon (19) est un filetage intérieur et ledit filetage de ladite partie filetée (2) est un filetage extérieur s'engageant dans ledit filetage intérieur.

5. Vis selon l'une quelconque des revendications précédentes, comprenant en outre des moyens de connexion pour connecter ladite rondelle de friction (5) avec ladite circonférence non circulaire de ladite autre partie (3) de l'élément de vis (1) et incluant des cannelures d'engagement réciproque prévues sur la rondelle de friction (5) et sur la circonférence non circulaire de ladite autre partie (3).

6. Vis selon la revendication 5, dans laquelle lesdites cannelures comprennent des cannelures s'étendant intérieurement prévues sur ladite rondelle de friction et, en engagement réciproque avec celle-ci, des cannelures s'étendant extérieurement prévues sur ladite circonférence non circulaire de ladite autre partie de l'élément de vis (1).
